# EUROPÄISCHE PATENTANMELDUNG

(11) **EP 4 818 660 A1**
(43) Veröffentlichungstag der Anmeldung: **07.10.2026**
(21) Anmeldenummer: 25167884.3
(22) Anmeldetag: 02.04.2025
(51) Int. Cl.: G01L 3/10

(54) **DREHMOMENTMESSUNG MIT FLEXIBLEN MAGNETORESISTIVEN SENSOREN**

(71) Anmelder: NCTE AG, 82041 Oberhaching (DE)
(72) Erfinder: Eckschlager, Florian, 85521 Riemerling (DE); Uebbing, Jürgen, 80997 München (DE)
(74) Vertreter: Grünecker Patent- und Rechtsanwälte PartG mbB

(57) **Zusammenfassung**

Der erfindungsgemäße magnetoelastische Drehmomentsensor umfasst eine Welle, an die ein um eine Längsachse der Welle wirkendes Drehmoment anlegbar ist und die in einem ersten axialen Abschnitt in einer ersten Umfangsrichtung magnetisiert ist; eine erste Magnetfeldsensoreinrichtung zum Erfassen eines durch den ersten axialen Abschnitt der Welle erzeugten, vom angelegten Drehmoment abhängigen Magnetfelds außerhalb der Welle; und eine Auswerteeinheit zur Bestimmung des angelegten Drehmoments aus einem dem erfassten Magnetfeld entsprechenden Signal der ersten Magnetfeldsensoreinrichtung. Die erste Magnetfeldsensoreinrichtung ist auf einem flexiblen Medium vorgesehen, und dazu ausgebildet ist, das vom ersten axialen Abschnitt erzeugte Magnetfeld zu jedem Messzeitpunkt vollständig über 360° um die Welle zu erfassen.

## Beschreibung

### Gebiet der Erfindung

Die Erfindung betrifft einen magnetoelastischen Drehmomentsensor und ein Verfahren zur Ermittlung eines an einer Welle anliegenden Drehmoments mit einem magnetoelastischen Drehmomentsensor.

### Stand der Technik

Magnetoelastische Drehmomentsensoren beruhen auf dem Effekt der magnetischen Permeabilitätsänderung bei Längenänderung (umgekehrte Magnetostriktion). Es gibt sowohl passive magnetoelastische Sensoren als auch aktive. Die vorliegende Patentanmeldung betrifft passive magnetoelastischen Sensoren basierend auf einer Vormagnetisierung der Messstelle und der Messung einer Änderung des Magnetfeldes aufgrund einer angelegten Last.

Drehmomentsensoren auf der Grundlage des (inversen) magnetostriktiven Effekts haben den Vorteil, dass die Messung des Drehmoments kontaktlos über das Erfassen eines Magnetfeldes erfolgen kann.

Bei der Messung von Magnetfeldänderungen durch ein an einer Welle anliegendes Drehmoment auf Basis der Magnetostriktion können Messspulen eigesetzt werden. Diese Messspulen werden berührungslos in Relation zur einer magnetisch codierten Messwelle angebracht (parallel zur Drehachse) und erfassen Magnetfeldänderungen, die auf Grund des magnetoelastischen Effekts unter Last (inverse Magnetostriktion) auftreten. Die Magnetfeldänderung ist direkt proportional zur äußeren Last (Kraft, Drehmoment) und stellt den Zusammenhang mit dem Drehmoment her.

Alternativ können auch magnetoresistive Magnetfeldsensoren zur Magnetfeldmessung eingesetzt werden. Ein Beispiel ist ein AMR-Sensor, der basierend auf dem anisotropen magnetoresistiven Effekt (AMR-Effekt) die Magnetfeldstärke bzw. dessen Änderung messen kann.

Die derzeit eingesetzten Drehmomentsensoren weisen jedoch die im Folgenden genannten Nachteile auf.

Die magnetisierte Welle weist häufig kleine Unregelmäßigkeiten in der initialen Magnetisierung auf, die dazu führen, dass ein von den Magnetfeldsensoren erfasstes Signal eine Komponente aufweist, die abhängig von der aktuellen Winkelstellung der Welle in Bezug auf den Magnetfeldsensor ist. Das aus diesem Signal bestimmte Drehmoment schwankt dann z.B. um einen Mittelwert, auch wenn das tatsächlich anliegende Drehmoment konstant ist. Idealerweise wäre das Signal hingegen unabhängig von der Winkelstellung, so dass ein (einziger) korrekter Wert für das anliegende Drehmoment ermittelt werden kann.

Es wurden zwar Möglichkeiten implementiert, bei denen auch solche Unregelmäßigkeiten in der Magnetisierung vermessen und abgespeichert wurden, um mit der Auswertungssoftware die Winkelabhängigkeit heraus zu rechen. Diese vorab durchzuführende Kalibrierung ist jedoch aufwändig und muss für jeden einzelnen Sensor separat bereitgestellt werden.

Angesichts dieser Nachteile ist es Aufgabe der vorliegenden Erfindung, einen Drehmomentsensor zur Verfügung zu stellen, der eine einfache, genaue und eindeutige Umrechnung in das anliegende Drehmoment ermöglicht.

### Beschreibung der Erfindung

Der Erfindung liegt die Aufgabe zugrunde die genannten Nachteile zumindest teilweise auszuräumen.

Diese Aufgabe wird durch einen magnetoelastischen Drehmomentsensor nach Anspruch 1 gelöst.

Der erfindungsgemäße magnetoelastische Drehmomentsensor umfasst eine Welle, an die ein um eine Längsachse der Welle wirkendes Drehmoment anlegbar ist und die in einem ersten axialen Abschnitt in einer ersten Umfangsrichtung magnetisiert ist; eine erste Magnetfeldsensoreinrichtung zum Erfassen eines durch den ersten axialen Abschnitt der Welle erzeugten, vom angelegten Drehmoment abhängigen Magnetfelds außerhalb der Welle; und eine Auswerteeinheit zur Bestimmung des angelegten Drehmoments aus einem dem erfassten Magnetfeld entsprechenden Signal der ersten Magnetfeldsensoreinrichtung. Die erste Magnetfeldsensoreinrichtung ist auf einem flexiblen Medium vorgesehen, und dazu ausgebildet ist, das vom ersten axialen Abschnitt erzeugte Magnetfeld zu jedem Messzeitpunkt vollständig über 360° um die Welle zu erfassen.

Das flexible Medium ermöglicht es, im Gegensatz zu Sensoren auf einem starren Medium, eine gleichmäßige Anordnung der Magnetfeldsensoreinrichtung in einem konstanten Abstand von der Welle und um die Welle herum zu erzielen.

Durch die Bereitstellung der Magnetfeldsensoreinrichtung umlaufend um die Welle wird zu jedem Zeitpunkt eine gleichzeitige vollständige Erfassung des durch das Drehmoment aufgrund der inversen Magnetostriktion erzeugten Magnetfeldes gewährleistet. Daher genügt eine einfache, einmalige Kalibrierung des Drehmomentsensors bei der Herstellung, um danach das anliegende Drehmoment genau zu bestimmen, unabhängig von einer eventuell vorhandenen Ungleichmäßigkeit der Magnetisierung in Umfangsrichtung.

Das Signal der ersten Magnetfeldsensoreinrichtung weist dann eine gute sogenannte RSU (Rotational Signal Uniformity) auf. Die RSU ist eine Maß für die Signaländerung welche bei der Drehung einer Welle um 360° in Längsachse entsteht. Idealerweise ist die RSU möglichst klein, insbesondere Null. Die Signaländerung begründet sich in einer nicht-idealen Magnetisierung des axialen Bereichs in Umfangsrichtung, was zu einer Rotationsasymmetrie der Sensorsignale bei einer Drehung der Welle um die Wellenachse führt. Bei einer idealen Magnetisierung wäre das gemessene Magnetfeld und somit das Sensorsignal unabhängig von der Winkelstellung der Welle und nur vom anliegenden Drehmoment abhängig. Die hier vorgeschlagene Messung des Magnetfeldes über 360° erübrigt eine von der relativen Winkellage der Welle und der Magnetfeldsensoreinrichtung abhängige Korrektur.

Eine Weiterbildung des erfindungsgemäßen Drehmomentsensors besteht darin, dass eine Empfindlichkeit der ersten Magnetfeldsensoreinrichtung für das erfasste Magnetfeld in Umfangsrichtung für jeden Winkel gleichmäßig sein kann. Dies führt zu einer weiteren Verbesserung der Unabhängigkeit des Sensorsignals von der Winkelstellung.

Eine andere Weiterbildung des erfindungsgemäßen Drehmomentsensors besteht darin, dass die Welle einen zweiten axialen Abschnitt aufweist, der in einer zweiten Umfangsrichtung magnetisiert ist, die gegenläufig zur ersten Umfangsrichtung ist; und wobei der Drehmomentsensor weiterhin eine zweite Magnetfeldsensoreinrichtung zum Erfassen eines durch den zweiten axialen Abschnitt der Welle erzeugten, vom angelegten Drehmoment abhängigen Magnetfelds außerhalb der Welle umfasst; wobei die Auswerteeinheit weiterhin zur Bestimmung des angelegten Drehmoments aus einem dem erfassten Magnetfeld entsprechenden Signal der zweiten Magnetfeldsensoreinrichtung ausgebildet ist; und wobei die zweite Magnetfeldsensoreinrichtung auf dem flexiblen Medium oder auf einem weiteren flexiblen Medium vorgesehen ist, und dazu ausgebildet ist, das vom zweiten axialen Abschnitt erzeugte Magnetfeld zu jedem Messzeitpunkt vollständig über 360° um die Welle zu erfassen. Es können auch ein oder mehr weitere magnetisierte axiale Abschnitte der Welle und jeweilige Magnetfeldsensoreinrichtungen vorgesehen sein, die auf dem flexiblen Medium oder auf weiteren flexiblen Medien ausgebildet sind, und die das jeweilige von den weiteren axialen Abschnitten erzeugte Magnetfeld zu jedem Messzeitpunkt vollständig über 360° um die Welle erfassen können.

Auf diese Weise kann die Genauigkeit nochmals gesteigert werden und insbesondere können konstante, vom angelegten Drehmoment unabhängige Störmagnetfelder kompensiert / heraus gerechnet werden.

Die durch die Magnetfeldsensoreinrichtung zu messenden Magnetfeldstärken können insbesondere im Bereich von ± 10 mT, ± 3 mT, ± 1 mT, ± 300 µT, oder ± 100 µT liegen. Daher ist der erfindungsgemäße magnetoelastische Drehmomentsensor mit einer geringen Magnetisierung der Welle betreibbar, die nur geringe Messfeldstärken hervorruft. Zum Vergleich: Die Feldstärke des Erdmagnetfeldes ist in Mitteleuropa ca. 50 µT.

Die Auswerteeinheit kann weiterhin dazu ausgebildet sein, den Einfluss eines äußeren Störmagnetfelds auf die Ermittlung des Drehmoments aus den Signalen von der ersten und zweiten Magnetfeldsensoreinrichtung zu kompensieren, insbesondere in Echtzeit bei einer Änderung des Störmagnetfelds.

Gemäß einer anderen Weiterbildung ist die erste und/oder die zweite Magnetfeldsensoreinrichtung dazu ausgebildet, das über 360° erfasste Magnetfeld aufzusummieren oder zu integrieren. Dadurch kann insbesondere zu jedem Messzeitpunkt das dem erfassten Magnetfeld entsprechende Signal der ersten Magnetfeldsensoreinrichtung unabhängig von einer relativen Winkelstellung zwischen der Welle und der ersten Magnetfeldsensoreinrichtung sein.

Eine andere Weiterbildung besteht darin, dass die erste und/oder die zweite Magnetfeldsensoreinrichtung eine jeweilige magnetoresistive Sensoreinrichtung, insbesondere eine auf das flexible Medium gedruckte magnetoresistive Sensoreinrichtung, umfasst.

Das flexible Medium kann ein polymeres Substrat, eine Folie oder ein Papier umfassen.

Dies kann dahingehend weitergebildet werden, dass die magnetoresistive Sensoreinrichtung ein xMR-Sensorelement umfasst. Dabei steht "xMR" insbesondere für ein Sensorelement basierend auf dem Effekt der giant magnetoresistance (GMR), tunnel magnetoresistance (TMR), colossal magnetoresistance (CMR), extraordinary magnetoresistance (EMR), large magnetoresistance LMR- oder anisotropic magnetoresistance (AMR).

Gemäß einer anderen Weiterbildung ist das flexible Medium mittels einer Halterung, beispielsweise einer Kunststoffhalterung, um die Welle herum fixiert.

Dies kann dahingehend weitergebildet werden, dass die Halterung als koaxial mit der Welle ausgebildete Hülse vorgesehen ist und das flexible Medium auf einer Innenseite oder einer Außenseite der Hülse vorgesehen ist.

Die Welle kann eine Voll- oder eine Hohlwelle sein.

Eine andere Weiterbildung besteht darin, dass jede magnetoresistive Sensoreinrichtung auf einem separaten flexiblen Medium ausgebildet ist, oder die erste und der zweite magnetoresistive Sensoreinrichtung auf genau einem flexiblen Medium ausgebildet sind.

Eine andere Weiterbildung besteht darin, dass die erste und/oder die zweite magnetoresistive Sensoreinrichtung zwei Abschnitte in Umfangsrichtung umfasst, wobei jeder Abschnitt das erzeugte Magnetfeld über 180° erfasst. Auf diese Weise kann die Erfassung des erzeugten Magnetfeldes auf zwei Umfangsabschnitte aufgeteilt sein.

Alternativ können auch magnetoresistive Sensoreinrichtungen eingesetzt werden, die mehrere Abschnitte aufweisen, die jeweils weniger als 360°, ungefähr 360° oder mehr als 360° erfassen. Insbesondere können mehrfach umlaufende Wicklungen der magnetoresistiven Sensoreinrichtung verwendet werden. Dies kann die Genauigkeit und Gleichmäßigkeit der Magnetfelderfassung nochmals verbessern.

Gemäß einer anderen Weiterbildung ist die Auswerteeinheit weiterhin dazu ausgebildet, den Einfluss eines äußeren Störmagnetfelds auf die Ermittlung des Drehmoments aus den Signalen der ersten und zweiten Magnetfeldsensoreinrichtung zu kompensieren, insbesondere in Echtzeit bei einer Änderung des Störmagnetfelds.

Dies kann dahingehend weitergebildet werden, dass das äußere Störmagnetfeld das Erdmagnetfeld und/oder ein Magnetfeld, das durch eine durch das Erdmagnetfeld hervorgerufene Magnetisierung der Welle erzeugt wird und/oder ein durch einen Permanentmagneten in der Nähe der Magnetfeldsensoreinrichtung erzeugtes Magnetfeld, umfasst.

Gemäß einer anderen Weiterbildung ist/sind die Magnetfeldsensoreinrichtung(en) dazu ausgebildet während einer Drehung der Welle um deren Längsachse und bei einem konstanten anliegenden Drehmoment ein konstantes Signal an die Auswerteeinheit auszugeben, insbesondere unabhängig von einer Rotationsasymmetrie des vom ersten und/oder zweiten axialen Abschnitt erzeugten Magnetfelds.

Eine andere Weiterbildung besteht darin, dass die Auswerteeinheit einen Datenspeicher umfasst, in dem ein Zusammenhang zwischen dem gemessenen Magnetfeld und dem an der Welle anliegenden Drehmoment abgespeichert ist.

Der Zusammenhang kann darin als tabellarischer Zusammenhang oder als funktionaler Zusammenhang abgespeichert sein. Dazu kann der Drehmomentsensor vor der Inbetriebnahme kalibriert worden sein, indem bei bekanntem Drehmoment die entsprechenden Magnetfeldstärken gemessen werden. Der funktionale Zusammenhang kann beispielsweise eine lineare Funktion sein, die das gemessene Magnetfeld auf das anliegende Drehmoment abbildet.

Die Erfindung stellt auch eine Vorrichtung bereit, die einen magnetoelastischen Drehmomentsensor gemäß der Erfindung oder gemäß einer der Weiterbildungen umfasst, wobei die Vorrichtung ein Tretlager eines Fahrrads oder eines E-Bikes, ein Motor, ein Motorprüfstand, ein Prüfstand für hochdrehende Wellen mit über 10.000 U/min., ein Getriebe, ein Roboter, ein Extruder, eine Richtmaschine, ein Flugzeug, ein Aktuator, eine Kardanwelle oder eine Antriebswelle ist.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform des erfindungsgemäßen Drehmomentsensors.
- Fig. 2: zeigt eine zweite Ausführungsform des erfindungsgemäßen Drehmomentsensors.

### Ausführungsformen

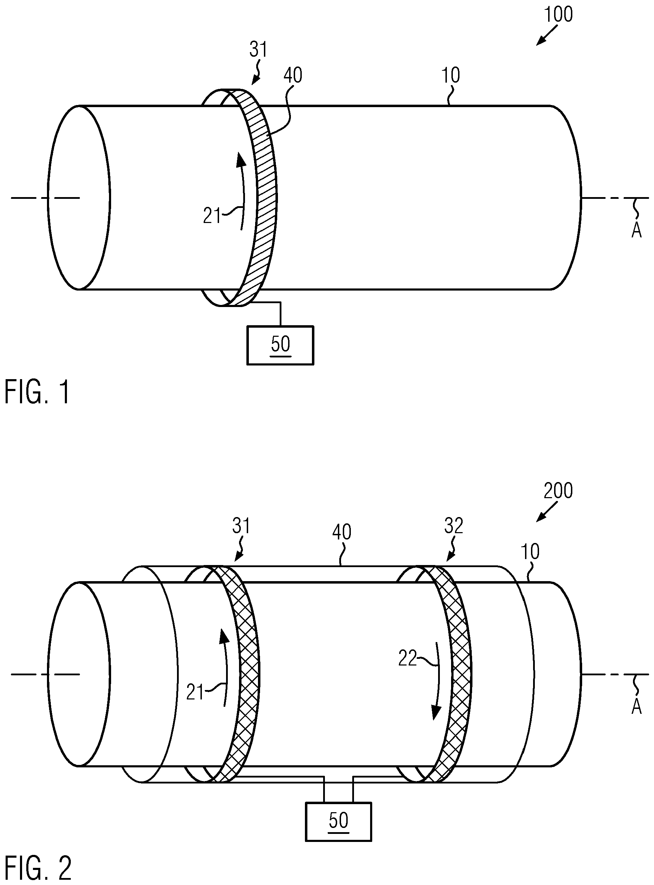

In Fig. 1 ist eine erste Ausführungsform 100 des erfindungsgemäßen Drehmomentsensors dargestellt.

Der erfindungsgemäße Drehmomentsensor 100 umfasst in dieser Ausführungsform eine Welle 10, an die ein um eine Längsachse A der Welle wirkendes Drehmoment anlegbar ist und die in einem ersten axialen Abschnitt 21 in einer ersten Umfangsrichtung magnetisiert ist; eine erste Magnetfeldsensoreinrichtung 31 zum Erfassen eines durch den ersten axialen Abschnitt 21 der Welle 10 erzeugten, vom angelegten Drehmoment abhängigen Magnetfelds außerhalb der Welle 10; und eine Auswerteeinheit 50 zur Bestimmung des angelegten Drehmoments aus einem dem erfassten Magnetfeld entsprechenden Signal, das von der ersten Magnetfeldsensoreinrichtung 31 erzeugt und von der Auswerteeinheit 50 empfangen wird. Die erste Magnetfeldsensoreinrichtung 31 ist auf einem flexiblen Medium 40 vorgesehen, und dazu ausgebildet ist, das vom ersten axialen Abschnitt 21 erzeugte Magnetfeld zu jedem Messzeitpunkt vollständig über 360° um die Welle 10 zu erfassen.

Das flexible Medium 40 ermöglicht eine gleichmäßige Anordnung der Magnetfeldsensoreinrichtung 31 in einem konstanten, radialen Abstand von der Welle 10 und über 360° um die Welle 10 herum zu erzielen.

Durch die Bereitstellung der Magnetfeldsensoreinrichtung 31 umlaufend um die Welle 10 wird zu jedem Zeitpunkt eine gleichzeitige und vollständige Erfassung des Magnetfelds, das vom ersten axialen Abschnitt 21 erzeugt wird, gewährleistet.

Das Signal der ersten Magnetfeldsensoreinrichtung weist dann eine gute sogenannte RSU (Rotational Signal Uniformity) auf. Die hier vorgeschlagene Messung des Magnetfeldes über 360° erübrigt eine von der relativen Winkellage der Welle 10 und der Magnetfeldsensoreinrichtung 31 abhängige Korrektur.

Die Empfindlichkeit der ersten Magnetfeldsensoreinrichtung 31 für das erfasste Magnetfeld in Umfangsrichtung ist idealerweise für jeden Winkel um die Welle 10 herum gleichmäßig. Dies führt zu einer weitgehenden Unabhängigkeit des Sensorsignals von der Winkelstellung bei gleichmäßiger Verteilung der für das Magnetfeld sensitiven Flächen der ersten Magnetfeldsensoreinrichtung 31.

Fig. 2 zeigt eine zweite Ausführungsform 200 des erfindungsgemäßen Drehmomentsensors.

Der Unterschied des erfindungsgemäßen Drehmomentsensors 200 in dieser zweiten Ausführungsform gegenüber der ersten Ausführungsform des erfindungsgemäßen Drehmomentsensors 100 nach Fig. 1 besteht darin, dass die Welle 10 einen zweiten axialen Abschnitt 22 aufweist, der in einer zweiten Umfangsrichtung magnetisiert ist, die gegenläufig zur ersten Umfangsrichtung ist; und wobei der Drehmomentsensor 200 weiterhin eine zweite Magnetfeldsensoreinrichtung 32 zum Erfassen eines durch den zweiten axialen Abschnitt 22 der Welle 10 erzeugten, vom angelegten Drehmoment abhängigen Magnetfelds außerhalb der Welle 10 umfasst; wobei die Auswerteeinheit 50 weiterhin zur Bestimmung des angelegten Drehmoments aus einem dem erfassten Magnetfeld entsprechenden Signal der zweiten Magnetfeldsensoreinrichtung 32 ausgebildet ist; und wobei die zweite Magnetfeldsensoreinrichtung 32 auf dem flexiblen Medium oder auf einem weiteren flexiblen Medium vorgesehen ist, und dazu ausgebildet ist, das vom zweiten axialen Abschnitt 22 erzeugte Magnetfeld zu jedem Messzeitpunkt vollständig über 360° um die Welle 10 zu erfassen.

Die Ausführungen in Bezug auch den ersten axialen Abschnitt 21 und die erste Magnetfeldsensoreinrichtung 31 der ersten Ausführungsform gelten hier entsprechend für den zusätzlichen zweiten axialen Abschnitt 22 und die zusätzliche zweite Magnetfeldsensoreinrichtung 32 der zweiten Ausführungsform.

Die dargestellten Ausführungsformen sind lediglich beispielhaft und der vollständige Umfang der vorliegenden Erfindung wird durch die Ansprüche definiert.

## Patentansprüche

1. Magnetoelastischer Drehmomentsensor, umfassend:
eine Welle, an die ein um eine Längsachse der Welle wirkendes Drehmoment anlegbar ist und die in einem ersten axialen Abschnitt in einer ersten Umfangsrichtung magnetisiert ist;
eine erste Magnetfeldsensoreinrichtung zum Erfassen eines durch den ersten axialen Abschnitt der Welle erzeugten, vom angelegten Drehmoment abhängigen Magnetfelds außerhalb der Welle; und
eine Auswerteeinheit zur Bestimmung des angelegten Drehmoments aus einem dem erfassten Magnetfeld entsprechenden Signal der ersten Magnetfeldsensoreinrichtung;
**dadurch gekennzeichnet, dass**
die erste Magnetfeldsensoreinrichtung auf einem flexiblen Medium vorgesehen ist, und dazu ausgebildet ist, das vom ersten axialen Abschnitt erzeugte Magnetfeld zu jedem Messzeitpunkt vollständig über 360° um die Welle zu erfassen.

2. Magnetoelastischer Drehmomentsensor nach Anspruch 1, wobei eine Empfindlichkeit der ersten Magnetfeldsensoreinrichtung für das erfasste Magnetfeld in Umfangsrichtung gleichmäßig ist.

3. Magnetoelastischer Drehmomentsensor nach Anspruch 1 oder 2, wobei die Welle einen zweiten axialen Abschnitt aufweist, der in einer zweiten Umfangsrichtung magnetisiert ist, die gegenläufig zur ersten Umfangsrichtung ist; und wobei der Drehmomentsensor weiterhin eine zweite Magnetfeldsensoreinrichtung zum Erfassen eines durch den zweiten axialen Abschnitt der Welle erzeugten, vom angelegten Drehmoment abhängigen Magnetfelds außerhalb der Welle umfasst; wobei die Auswerteeinheit weiterhin zur Bestimmung des angelegten Drehmoments aus einem dem erfassten Magnetfeld entsprechenden Signal der zweiten Magnetfeldsensoreinrichtung ausgebildet ist; und wobei die zweite Magnetfeldsensoreinrichtung auf dem flexiblen Medium oder auf einem weiteren flexiblen Medium vorgesehen ist, und dazu ausgebildet ist, das vom zweiten axialen Abschnitt erzeugte Magnetfeld zu jedem Messzeitpunkt vollständig über 360° um die Welle zu erfassen.

4. Magnetoelastischer Drehmomentsensor nach einem der Ansprüche 1 bis 3, wobei die erste und/oder die zweite Magnetfeldsensoreinrichtung dazu ausgebildet ist, das über 360° erfasste Magnetfeld aufzusummieren oder zu integrieren, so dass insbesondere zu jedem Messzeitpunkt das dem erfassten Magnetfeld entsprechende Signal der ersten Magnetfeldsensoreinrichtung unabhängig von einer relativen Winkelstellung zwischen der Welle und der ersten Magnetfeldsensoreinrichtung ist.

5. Magnetoelastischer Drehmomentsensor nach einem der Ansprüche 1 bis 4, wobei die erste und/oder die zweite Magnetfeldsensoreinrichtung eine jeweilige magnetoresistive Sensoreinrichtung, insbesondere eine auf das flexible Medium gedruckte magnetoresistive Sensoreinrichtung, umfasst.

6. Magnetoelastischer Drehmomentsensor nach Anspruch 5, wobei die magnetoresistive Sensoreinrichtung ein xMR-Sensorelement umfasst, insbesondere ein GMR-, TMR-, CMR-, EMR-, LMR- oder ein AMR-Sensorelement; und/oder wobei das flexible Medium ein polymeres Substrat, eine Folie oder ein Papier umfasst.

7. Magnetoelastischer Drehmomentsensor nach einem der Ansprüche 1 bis 6, wobei das flexible Medium mittels Halterung, beispielsweise einer Kunststoffhalterung, um die Welle herum fixiert ist.

8. Magnetoelastischer Drehmomentsensor nach Anspruch 7, wobei die Halterung als koaxial mit der Welle ausgebildete Hülse vorgesehen ist und das flexible Medium auf einer Innenseite oder einer Außenseite der Hülse vorgesehen ist.

9. Magnetoelastischer Drehmomentsensor nach einem der Ansprüche 3 bis 8, wobei jede magnetoresistive Sensoreinrichtung auf einem separaten flexiblen Medium ausgebildet ist, oder wobei die erste und der zweite magnetoresistive Sensoreinrichtung auf genau einem flexiblen Medium ausgebildet sind.

10. Magnetoelastischer Drehmomentsensor nach einem der Ansprüche 1 bis 9, wobei die erste und/oder die zweite magnetoresistive Sensoreinrichtung jeweils zwei oder mehr Abschnitte in Umfangsrichtung umfasst, wobei jeder Abschnitt das erzeugte Magnetfeld über weniger als 360°, insbesondere über 180° erfasst, oder wobei die erste und/oder die zweite magnetoresistive Sensoreinrichtung mehrfach um die Welle umlaufend vorgesehen ist.

11. Magnetoelastischer Drehmomentsensor nach einem der Ansprüche 3 bis 10, wobei die Auswerteeinheit weiterhin dazu ausgebildet ist, den Einfluss eines äußeren Störmagnetfelds auf die Ermittlung des Drehmoments aus den Signalen der ersten und zweiten Magnetfeldsensoreinrichtung zu kompensieren, insbesondere in Echtzeit bei einer Änderung des Störmagnetfelds, insbesondere wobei das äußere Störmagnetfeld das Erdmagnetfeld und/oder ein Magnetfeld, das durch eine durch das Erdmagnetfeld hervorgerufene Magnetisierung der Welle erzeugt wird und/oder ein durch einen Permanentmagneten in der Nähe der Magnetfeldsensoreinrichtung erzeugtes Magnetfeld, umfasst.

12. Magnetoelastischer Drehmomentsensor nach einem der Ansprüche 1 bis 11, wobei die Magnetfeldsensoreinrichtung(en) dazu ausgebildet ist/sind während einer Drehung der Welle um deren Längsachse und bei einem konstanten anliegenden Drehmoment ein konstantes Signal an die Auswerteeinheit auszugeben, insbesondere unabhängig von einer Rotationsasymmetrie des vom ersten und/oder zweiten axialen Abschnitt erzeugten Magnetfelds.

13. Magnetoelastischer Drehmomentsensor nach einem der Ansprüche 1 bis 12, wobei die Auswerteeinheit einen Datenspeicher umfasst, in dem ein Zusammenhang zwischen dem gemessenen Magnetfeld und dem an der Welle anliegenden Drehmoment abgespeichert ist.

14. Magnetoelastischer Drehmomentsensor nach einem der Ansprüche 1 bis 13, wobei die Welle drehbar um die Achse gelagert ist.

15. Vorrichtung, die einen magnetoelastischer Drehmomentsensor nach einem der Ansprüche 1 bis 14 umfasst, wobei die Vorrichtung ein Tretlager eines Fahrrads oder eines E-Bikes, ein Motor, ein Motorprüfstand, ein Prüfstand für hochdrehende Wellen mit über 10.000 U/min., ein Getriebe, ein Roboter, ein Extruder, eine Richtmaschine, ein Flugzeug, ein Aktuator, eine Kardanwelle oder eine Antriebswelle ist.
